(19) **Europäisches Patentamt**
**European Patent Office**
**Office européen des brevets**

(11) **EP 3 459 752 A1**

(12) # EUROPEAN PATENT APPLICATION
published in accordance with Art. 153(4) EPC

(43) Date of publication:
**27.03.2019 Bulletin 2019/13**

(21) Application number: **16902428.8**

(22) Date of filing: **19.05.2016**

(51) Int Cl.:
**B41J 29/38** (2006.01)      **B41J 2/01** (2006.01)
**B41J 3/36** (2006.01)      **B41J 11/42** (2006.01)
**B41J 29/42** (2006.01)      **G06F 3/12** (2006.01)

(86) International application number:
**PCT/JP2016/064940**

(87) International publication number:
**WO 2017/199409 (23.11.2017 Gazette 2017/47)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **Fujitsu Frontech Limited**
**Inagi-shi, Tokyo 206-8555 (JP)**

(72) Inventors:
• **KURIHARA, Makoto**
**Inagi-shi**
**Tokyo 206-8555 (JP)**

• **KITAGAWA, Takeshi**
**Inagi-shi**
**Tokyo 206-8555 (JP)**
• **KOMAKI, Yasushi**
**Inagi-shi**
**Tokyo 206-8555 (JP)**

(74) Representative: **Haseltine Lake LLP**
**Lincoln House, 5th Floor**
**300 High Holborn**
**London WC1V 7JH (GB)**

(54) **PRINTER DEVICE, PRINTER CONTROL DEVICE, AND PRINTER DRIVER PROGRAM**

(57)      A printer apparatus (6) records a first correction value and prints print data on a first medium by feeding the first medium on the basis of a first correction value when the print data is received from the printer control apparatus. A measurement value corresponding to a feeding error of the first medium is measured and is transmitted to the printer control apparatus when the first medium is fed. When a second correction value set on the basis of this measurement value is received from the printer control apparatus, the second correction value is recorded instead of the first correction value. When a retry command is received from the printer control apparatus, the print data is printed on a second medium among a plurality of media by feeding the second medium on the basis of the second correction value.

FIG.10

**Description**

Technical Field

The present invention relates to a printer apparatus, a printer control apparatus, and a printer driver program.

Background Art

There is known a printer apparatus for printing an oblong medium such as a baggage tag attached to baggage in the airport. The printer apparatus measures a feeding error caused by feeding an adjustment medium in practice in a factory or the like, and records a correction value calculated on the basis of the feeding error. In such a printer apparatus, when printing is performed on an actual medium, the feeding is adjusted using the recorded correction value to appropriately feed the medium and appropriately perform printing (for example, see Patent Literatures 1 to 3).

Citation List

Patent Literature

Patent Literature 1: Japanese Laid-open Patent Publication No. 2012-116133
Patent Literature 2: Japanese Laid-open Patent Publication No. 08-87610
Patent Literature 3: Japanese Laid-open Patent Publication No. 2001-225518

Summary of invention

Technical Problem

However, in some cases, an adjustment medium used to set the correction value in a factory is different from a medium used in actual printing, and characteristics such as thickness or smoothness are different from those of the medium used in actual printing. For this reason, in the printer apparatus, even when the feeding error changes, and the feeding is adjusted using the correction value, the medium is not appropriately fed, and the printing is not appropriately performed on the medium in some cases. Furthermore, in the printer apparatus, the feeding error changes in some cases due to aging such as wear on a roll caused by repeated printing. In this case, in the printer apparatus, the medium is not appropriately fed, and the printing is not appropriately performed on the medium even when the feeding is adjusted using the correction value.

The disclosed technology has been made, in view of the aforementioned demands, to provide a printer apparatus, a printer control apparatus, and a printer driver program for appropriately performing printing on a medium.

Solution to Problem

According to an aspect of an embodiment, a printer apparatus includes a memory unit configured to record a first correction value, a print unit configured to print print data on a first medium among a plurality of media by feeding the first medium on the basis of the first correction value when the print data is received from a printer control apparatus, a sensor unit configured to measure a measurement value corresponding to a feeding error of the first medium when the first medium is fed, a measurement value transmission unit configured to transmit the measurement value to the printer control apparatus, and a correction value update unit configured to update the first correction value to a second correction value set on the basis of the measurement value when the second correction value is received from the printer control apparatus, wherein the print unit prints the print data on a second medium by feeding the second medium among the media on the basis of the second correction value when the first correction value is updated to the second correction value, and a retry command is then received from the printer control apparatus.

Advantageous Effects of Invention

Using the printer apparatus, the printer control apparatus, and the printer driver program disclosed herein, it is possible to appropriately print a medium even when a feeding error caused by feeding the medium changes.

Brief Description of Drawings

FIG. 1 is a diagram illustrating a printer system provided with a printer apparatus according to an embodiment of the invention.
FIG. 2 is a top plan view illustrating a plurality of tags printed by the printer apparatus.
FIG. 3 is a block diagram illustrating the printer apparatus.
FIG. 4 is a diagram illustrating a correction value table.
FIG. 5 is a top plan view illustrating a tag appropriately printed.
FIG. 6 is a top plan view illustrating a tag in an expanding print state.
FIG. 7 is a top plan view illustrating a tag in a contracting print state.
FIG. 8 is a block diagram illustrating a printer control apparatus.
FIG. 9 is a diagram illustrating an allowable range table.
FIG. 10 is a flowchart illustrating operations of a printer system.

Embodiments for Carrying Out the Invention

A printer apparatus according to an embodiment of the invention will now be described with reference to the accompanying drawings. Note that the invention is not limited to those described below. In the following description, like reference numerals denote like elements, and they will not be described repeatedly.

<Embodiment>

[Printer System]

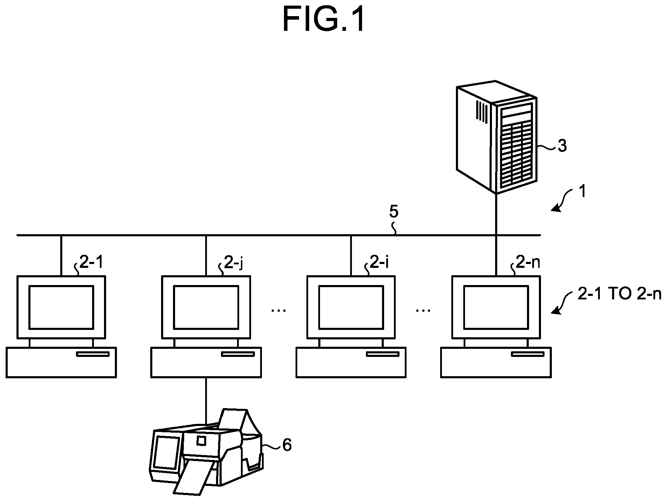

FIG. 1 is a diagram illustrating a printer system provided with a printer apparatus according to an embodiment of the invention. As illustrated in FIG. 1, the printer system 1 has a plurality of printer control apparatuses 2-1 to 2-n (n = 2, 3, 4, ...) and a host computer 3. Any printer control apparatus 2-i (i = 1, 2, 3, ..., n) among a plurality of printer control apparatuses 2-1 to 2-n has a computer. The host computer 3 has a computer. A plurality of printer control apparatuses 2-1 to 2-n are placed in a plurality of baggage counters in the airport. A plurality of printer control apparatuses 2-1 to 2-n and the host computer 3 are connected to each other to transmit information to each other through a communication line 5. The printer system 1 further has a printer apparatus 6. The printer apparatus 6 is connected to one printer control apparatus 2-j (j = 1, 2, 3, ..., n) among a plurality of printer control apparatuses 2-1 to 2-n to transmit information. For this reason, the printer control apparatus 2-i can bidirectionally transmit information to the printer apparatus 6 through the communication line 5 and the printer control apparatus 2-j even when the printer control apparatus 2-i is not directly connected to the printer apparatus 6.

[Tags]

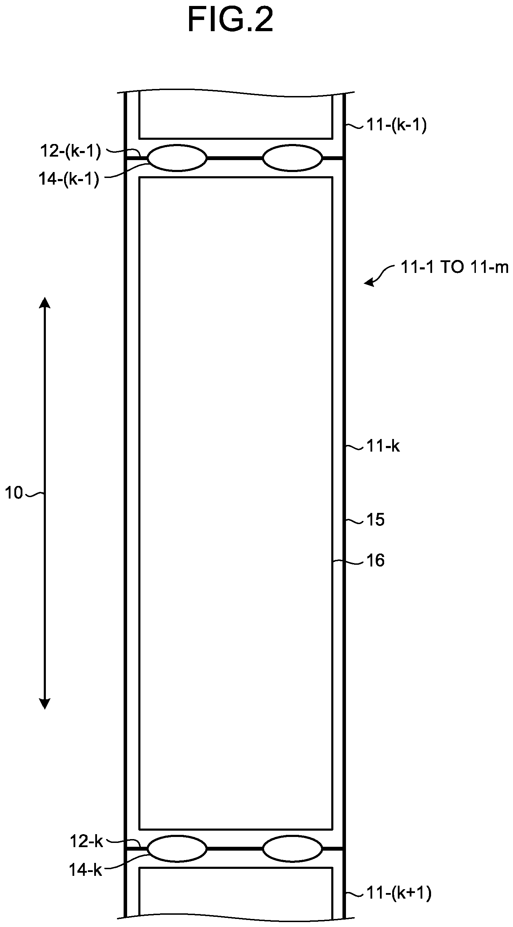

FIG. 2 is a top plan view illustrating a plurality of tags printed by the printer apparatus 6. A plurality of tags 11-1 to 11-m (m = 2, 3, 4, ...) are provided as a so-called fan-fold sheet and arranged in parallel with a feeding direction 10 as illustrated in FIG. 2. Any tag 11-k (k = 1, 2, 3, ..., m) of a plurality of tags 11-1 to 11-m is formed in a rectangular sheet shape and has a pair of short sides of which one side is coupled to the tag 11-(k-1) and the other side is coupled to the tag 11-(k+1). A plurality of tags 11-1 to 11-m have a plurality of perforations and a plurality of holes. The perforation 12-(k-1) among a plurality of perforations is formed on a border line between the tag 11-k and the tag 11-(k-1). The perforation 12-k among a plurality of perforations is formed on a border line between the tag 11-k and the tag 11-(k+1). The hole 14-(k-1) among a plurality of holes is formed on a border line between the tag 11-k and the tag 11-(k-1) to intersect the perforation 12-(k-1). The hole 14-k among a plurality of holes is formed on a border line between the tag 11-k and the tag 11-(k+1) to intersect the perforation 12-k. A plurality of tags 11-1 to 11-m are folded along a plurality of perforations and are bound. In this case, the perforation 12-(k-1) is folded oppositely to the perforation 12-k.
The tag 11-k has a pasteboard 15 and a seal 16. The pasteboard 15 is formed of a so-called releasable sheet and has one surface of a pasteboard base member coated with a releasable layer. The seal 16 includes a seal base member smaller than the pasteboard 15, and an adhesive is applied to one surface of the seal base member. In the pasteboard 15, the surface having the releasable layer makes contact with the surface of the seal 16 coated with an adhesive to protect the adhesive to maintain adhesion performance of the adhesive. The seal 16 is a so-called baggage tag. The seal 16 is peeled from the pasteboard 15 and is attached to baggage after print data is printed on the tag 11-k.

[Printer Apparatus]

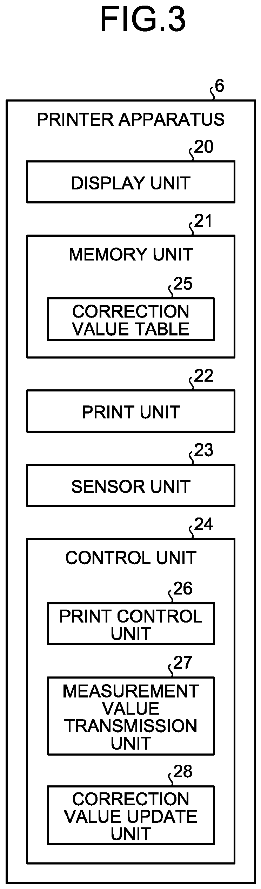

FIG. 3 is a block diagram illustrating the printer apparatus 6. As illustrated in FIG. 3, the printer apparatus 6 includes a display unit 20, a memory unit 21, a print unit 22, a sensor unit 23, and a control unit 24.

The display unit 20 includes a display device having a display surface. The display unit 20 is controlled by the control unit 24 to display a message on the display surface.

The memory unit 21 includes a readable/writable storage device to record a correction value table 25. Furthermore, the memory unit 21 is controlled by the control unit 24 to update the correction value table 25.

The print unit 22 has a feeding motor, a feeding roll, and a print head. The feeding motor has, for example, a stepping motor and is controlled by the control unit 24. The feeding motor is rotated in the unit of constant stepping angle at a predetermined timing to rotate the feeding roll at a predetermined rotation speed. The feeding roll is rotated while making contact with one tag 11-k among a plurality of tags 11-1 to 11-m housed in the printer apparatus 6 to feed the tag 11-k. The print head is controlled by the control unit 24 to inject ink to the tag 11-k fed from the feeding roll on a predetermined fire interval basis to print the print data on the tag 11-k.

The sensor unit 23 includes a transmission type sensor. The sensor unit 23 is controlled by the control unit 24 to measure a time point at which the hole 14-(k-1) passes through a predetermined position while the tag 11-k is fed by the print unit 22 and measure a time point at which the hole 14-k passes through a predetermined position.

The control unit 24 includes a computer or an application specific integrated circuit (ASIC) to implement a plurality of functions. The functions include a print control unit 26, a measurement value transmission unit 27, and a correction value update unit 28.

The print control unit 26 controls the print unit 22 such that the tag 11-k is fed when the printer apparatus 6 receives print information from the printer control apparatus 2-i. The print information contains an airline code and print information. The print control unit 26 controls the print unit 22 such that the feeding of the tag 11-k is adjusted on the basis of the airline code and the correction value table 25. Furthermore, the print control unit 26 controls the print unit 22 such that the print data is printed on the tag 11-k while the tag 11-k is fed.

The measurement value transmission unit 27 controls the sensor unit 23 to measure a first time point at which the hole 14-(k-1) passes through a predetermined position and a second time point at which the hole 14-k passes through a predetermined position while the tag 11-k is fed by the print control unit 26. The measurement value transmission unit 27 calculates a length from the hole 14-(k-1) to the hole 14-k on the basis of the measured first and second time points. In addition, the measurement value transmission unit 27 calculates a measurement value corresponding to a feeding error generated by feeding the tag 11-k on the basis of the calculated length. Furthermore, the measurement value transmission unit 27 replies to the printer control apparatus 2-i regarding the calculated measurement value.

The correction value update unit 28 controls the memory unit 21 such that the correction value table 25 is updated on the basis of correction value information when the correction value information is received from the printer control apparatus 2-i. The correction value information contains an airline code and a correction value.

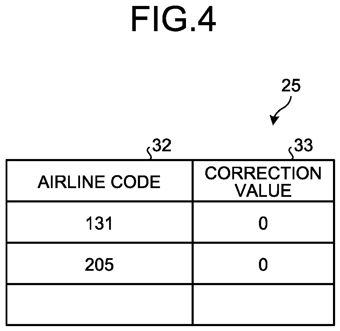

FIG. 4 is a diagram illustrating the correction value table 25. In the correction value table 25, a plurality of airline codes 32 are associated with a plurality of correction values 33. Each of the airline codes 32 are expressed as three-digit numerals to identify a plurality of airline companies and types of a plurality of tags 11-1 to 11-m housed in the printer apparatus 6. One correction value among a plurality of correction values 33 associated with a certain airline code represents a correction value used in the feeding adjustment when a type of the tag 11-k identified by the corresponding airline code is fed by the print unit 22.

That is, when the printer apparatus 6 receives the print information from the printer control apparatus 2-i, the print control unit 26 calculates one correction value corresponding to the airline code indicated by the print information among a plurality of correction values 33 by referencing the correction value table 25. The print control unit 26 controls the print unit 22 to adjust the feeding on the basis of the calculated correction value when the tag 11-k is fed. In addition, the print control unit 26 controls the print unit 22 to print the print data indicated by the print information on the tag 11-k while the tag 11-k is fed.

The correction value update unit 28 updates the correction value table 25 such that, when correction value information is received from the printer control apparatus 2-i, the correction value corresponding to the airline code indicted by the corresponding correction value information among a plurality of correction values 33 represents the correction value indicated by the corresponding correction value information.

[Print Region]

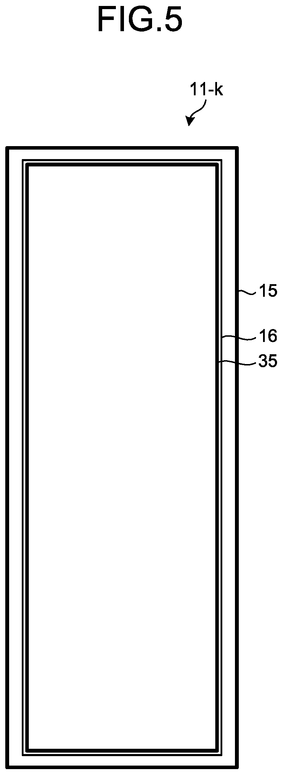

FIG. 5 is a top plan view illustrating the tag 11-k appropriately printed. A print region 35 printed by the print unit 22 is formed to wholly include the seal 16 when the tag 11-k is appropriately fed by the printer apparatus 6 as illustrated in FIG. 5. In addition, the print region 35 is formed such that a region of the seal 16 excluding the print region 35 is smaller than a predetermined area.

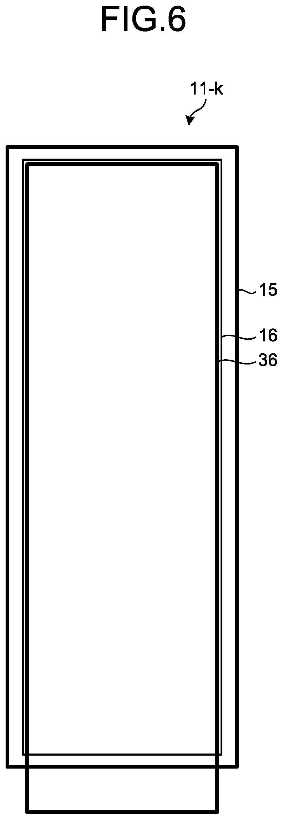

FIG. 6 is a top plan view illustrating the tag 11-k in an expanding print state. When the tag 11-k is not appropriately fed by the printer apparatus 6, a print region 36 printed by the print unit 22 may be formed to partially exceed the seal 16 as illustrated in FIG. 6 in some cases.

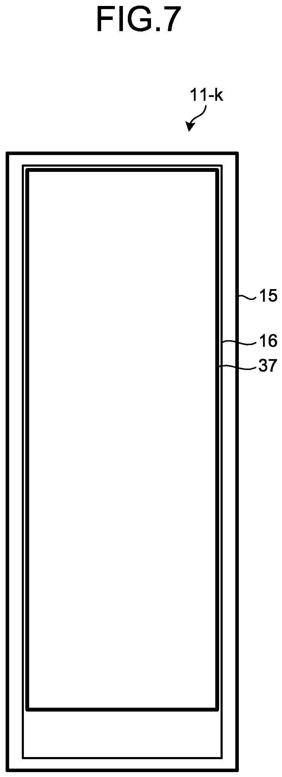

FIG. 7 is a top plan view illustrating the tag in a contracting print state. When the tag 11-k is not appropriately fed by the printer apparatus 6, a print region 37 printed by the print unit 22 may be formed such that a region of the seal 16 excluding the print region 37 is larger than a predetermined area as illustrated in FIG. 7 in some cases.

[Printer Control Apparatus]

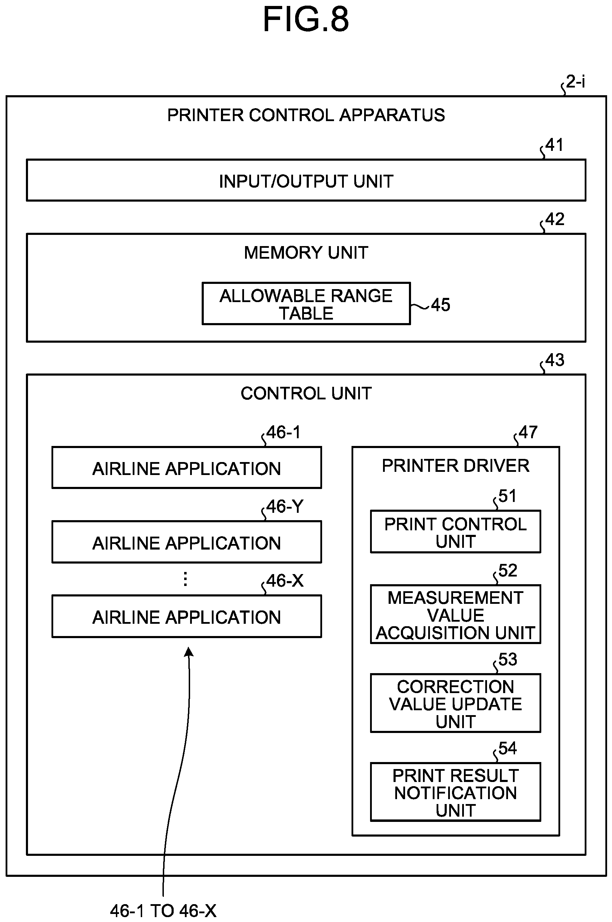

FIG. 8 is a block diagram illustrating the printer control apparatus 2-i. The printer control apparatus 2-i has an input/output unit 41, a memory unit 42, and a control unit 43 as illustrated in FIG. 8. The input/output unit 41 outputs information created by a user's manipulation to the control unit 43 and outputs information created by the control unit 43 to be recognized by a user. The input/output unit 41 includes, for example, a touch panel. The memory unit 42 includes a readable/writable storage device to record a computer program installed in the printer control apparatus 2-i and record information used by the control unit 43. In addition, the memory unit 42 records an allowable range table 45. The control unit 43 controls the input/output unit 41 and the memory unit 42 by executing the computer program installed in the printer control apparatus 2-i and controls the printer apparatus 6 by bidirectionally transmitting information to the printer apparatus 6.

The printer control apparatus 2-i further has a recording medium drive (not illustrated). When a tangible computer readable recording medium is inserted non-transitorily, the recording medium drive is used to read the data recorded in the recording medium. In addition, when a recording medium on which a computer program is recorded is inserted, the recording medium drive is used to install the computer program in the printer control apparatus 2-i. Such a recording medium includes a flash memory, a magnetic disc (flexible disc, hard disk), and an optical disc (CD, DVD).

The computer program installed in the printer control apparatus 2-i includes a plurality of airline applications 46-1 to 46-X and a printer driver 47.

A plurality of airline applications 46-1 to 46-X are computer programs respectively provided from a plurality of airline companies. Any airline application 46-Y (Y = 1, 2, 3, ..., X) among a plurality of airline applications 46-1 to 46-X is created on the basis of information input to the printer control apparatus 2-i through the input/output unit 41. The print information contains an airline code and print data. The airline code identifies an airline company that provides the airline application 46-Y and the type of a plurality of tags 11-1 to 11-m used by the airline company. For this reason, the airline code of the print information created by one airline application 46-Y is constant. The print data contains printing data and image data. The printing data represents character strings printed by the tag 11-k. The image data represents an image printed on the tag 11-k. The airline application 46-Y controls the printer apparatus 6 such that the created print data is printed by the printer apparatus 6 on the tag 11-k by transmitting the created print information to the printer driver 47. The airline application 46-Y controls the input/output unit 41 such that a message indicating a print result is displayed when the print result is acquired from the printer driver 47.

The printer driver 47 includes a plurality of computer programs for implementing a plurality of functions in the printer control apparatus 2-i. A plurality of functions include a printer control unit 51, a measurement value acquisition unit 52, a correction value update unit 53, and a print result notification unit 54.

The printer control unit 51 controls the printer apparatus 6 such that print data contained in print information is printed on the tag 11-k by transmitting the print information to the printer apparatus 6 when the print information is acquired from the airline application 46-Y. In addition, the printer control unit 51 determines whether or not the measurement value acquired by the measurement value acquisition unit 52 is included in a predetermined allowable range. The printer control unit 51 transmits a retry command to the printer apparatus 6 along with the print information transmitted in the past when the measurement value is not included in the allowable range. The printer control unit 51 controls the printer apparatus 6 such that the print data contained in the print information is printed on the tag 11-(k+1) next to the tag 11-k by transmitting the retry command to the printer apparatus 6 along with the print information transmitted in the past.

The measurement value acquisition unit 52 acquires the measurement value information from the printer apparatus 6. The measurement value information contains an airline code and a measurement value.

When the measurement value acquisition unit 52 acquires measurement value information, the correction value update unit 53 calculates the correction value on the basis of the measurement value contained the measurement value information.

For example, assuming that a feeding motor of the printer apparatus 6 feeds the tag 11-k having a length of 500 mm by 0.125 mm per one step, and the length of the tag 11-k was measured by the printer apparatus 6 as 502 mm, a feeding error can be expressed as:

$$2 \; (mm)/0.125 \; (mm) = 16 \; (steps),$$

and
the number of steps for feeding the tag 11-k can be expressed as:

$$500 \; (mm)/0.125 \; (mm) = 4000 \; (steps).$$

In this case, a correction value can be expressed as:

$$4000 \; (step)/16 \; (step) = 250.$$

In this case, the print unit 22 of the printer apparatus 6 adjusts the feeding of the feeding motor by reducing 1 step for 250 steps.

The correction value update unit 53 transmits correction value information to the printer apparatus 6 after calculating the correction value. This correction value information contains a correction value and an airline code. This airline code matches the airline code contained in the measurement value information to represent the measurement value used to calculate the corresponding correction value.

The print result notification unit 54 returns the print result to the airline application 46-Y that creates the corresponding print information. This print result represents whether or not the printer control unit 51 transmits a retry command to the printer apparatus 6 and whether or not the printer control unit 51 appropriately prints the tag 11-k.

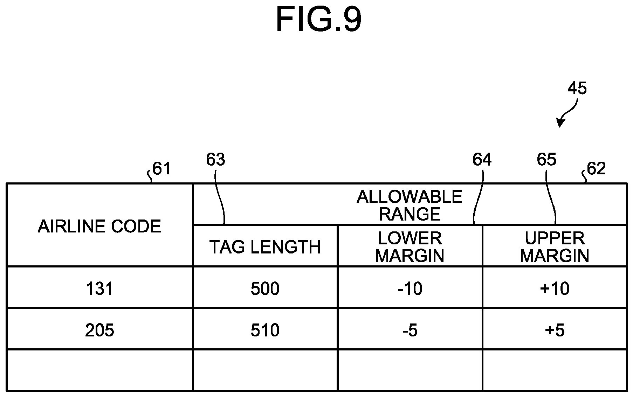

FIG. 9 is a diagram illustrating an allowable range table 45. As illustrated in FIG. 9, a plurality of airline codes 61 are associated with a plurality of allowable ranges 62 in the allowable range table 45. A plurality of airline codes 61 are used to identify a plurality of airline companies and types of a plurality of tags 11-1 to 11-m. Among a plurality of allowable ranges 62, one allowable range associated with a certain airline code represents an allowable range of the measurement value calculated by the printer apparatus 6 when the printer apparatus 6 prints the tag 11-k used by the airline company corresponding to this airline code. This allowable range includes a tag length 63, a lower margin 64, and an upper margin 65. The tag length 63 represents a true length of the tag 11-k. The lower margin 64 represents a value obtained by subtracting the tag length 63 from the lower limit of the allowable range. That is, a value obtained by adding the lower margin 64 to the tag length 63 is a lower limit of the allowable range. The upper margin 65 represents a value obtained by subtracting the tag length 63 from the upper limit of the allowable range. That is, a value obtained by adding the upper margin 65 to the tag length 63 is an upper limit of the allowable range.

The allowable range table 45 is recorded in the memory unit 42 of the printer control apparatus 2-i as text data. For this reason, a user can update the allowable range table 45 by manipulating the printer control apparatus 2-i.

[Operation of Printer System]

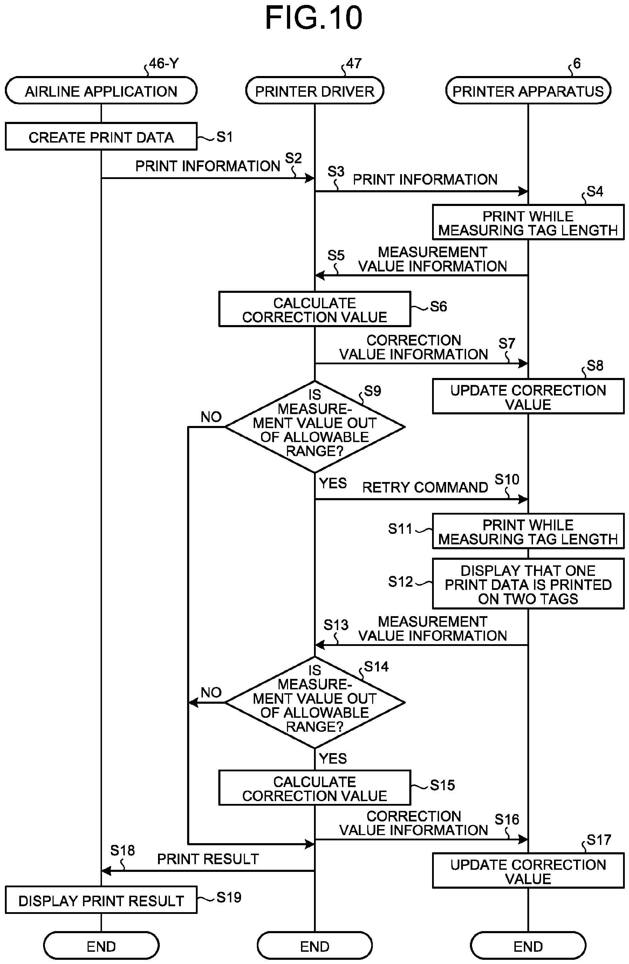

FIG. 10 is a flowchart illustrating operations of the printer system 1. A user houses a plurality of tags 11-1 to 11-m used by a certain airline company in the printer apparatus 6. Then, a user executes the airline application 46-Y corresponding to this airline company among a plurality of airline applications 46-1 to 46-X using the printer control apparatus 2-i by manipulating the printer control apparatus 2-i. A user creates print data by manipulating the printer control apparatus 2-i using the airline application 46-Y (Step S1). This print data contains printing data and image data. The printing data represents a character string. The image data represents an image.

As the print data is created, the airline application 46-Y creates print information. The print information contains the airline code and the created print data. The airline code represents the airline code corresponding to the airline application 46-Y. As the print information is created, the airline application 46-Y executes the printer driver 47 and returns the print information to the printer driver 47 (Step S2). As the print information is returned from the airline application 46-Y, the printer driver 47 transmits this print information to the printer apparatus 6 (Step S3).

As the print information is acquired from the printer control apparatus 2-i, the printer apparatus 6 calculates one correction value corresponding to the airline code contained in this print information from a plurality of correction values 33 by referencing the correction value table 25. The printer apparatus 6 adjusts the feeding by controlling the print unit 22 on the basis of the calculated correction value to feed one tag 11-k among a plurality of tags 11-1 to 11-m. The printer apparatus 6 prints the print data on the tag 11-k by controlling the print unit 22 while feeding the tag 11-k. The printer apparatus 6 measures a first time point at which the hole 14-(k-1) passes through a predetermined position and a second time point at which the hole 14-k passes through a predetermined position by controlling the sensor unit 23 while feeding the tag 11-k. The printer apparatus 6 measures a length of the tag 11-k on the basis of the first and second time points measured. In addition, the printer apparatus 6 calculates a measurement value on the basis of the measured length (Step S4). As the measurement value is calculated, the printer apparatus 6 creates the measurement value information on the basis of this measurement value and replies to the printer control apparatus 2-i regarding this measurement value information (Step S5). This measurement value information contains the measurement value and the airline code. This airline code matches the airline code contained in the corresponding print information.

As the printer control apparatus 2-i acquires the measurement value information from the printer apparatus 6, the printer driver 47 calculates a correction value on the basis of the measurement value contained in this measurement value information (Step S6). As the correction value is calculated, the printer driver 47 creates correction value information. This correction value information contains the airline code and the corresponding correction value. This airline code matches the airline code contained in the measurement value information acquired from the printer apparatus 6. As the correction value information is created, the printer driver 47 transmits this correction value information to the printer apparatus 6 (Step S7).

As the correction value information is acquired from the printer control apparatus 2-i, the printer apparatus 6 updates the correction value table 25 such that one correction value corresponding to the airline code contained in this correction value information among a plurality of correction values 33 represents the correction value contained in the corresponding correction value information (Step S8).

As the printer control apparatus 2-i acquires the measurement value information from the printer apparatus 6, the printer driver 47 calculates one allowable range corresponding to the airline code contained in this measurement value information from a plurality of allowable ranges 62 by referencing the allowable range table 45. As the allowable range is calculated, the printer driver 47 determines whether or not the measurement value contained in this measurement value information is included in the corresponding allowable range (Step S9). If this measurement value is not included in the corresponding allowable range (Step S9, Yes), the printer driver 47 transmits the print information to the printer apparatus 6 along with a retry command (Step S10).

As the print information is acquired from the printer control apparatus 2-i along with the retry command, the printer apparatus 6 calculates one correction value corresponding to the airline code contained in this print information from a plurality of correction values 33 by referencing the correction value table 25 again. The printer apparatus 6 feeds the tag 11-(k+1) next to the tag 11-k among a plurality of tags 11-1 to 11-m by adjusting the feeding on the basis of the calculated correction value by controlling the print unit 22. The printer apparatus 6 prints the print data on the tag 11-(k+1) by controlling the print unit 22 while feeding the tag 11-(k+1). Similar to the case of the tag 11-k, the printer apparatus 6 measures the first and second time points and the length of the tag 11-(k+1) by controlling the sensor unit 23 while feeding the tag 11-(k+1). The printer apparatus 6 calculates the measurement value corresponding to a feeding error on the basis of the measured length (Step S11).

If the retry command is acquired, the printer apparatus 6 displays a fact that one print data is printed on two tags among a plurality of tags 11-1 to 11-m by controlling the display unit 20 after printing the print data on the tag 11-(k+1) (Step S12). In addition, the printer apparatus 6 creates measurement value information on the basis of the calculated measurement value and replies to the printer control apparatus 2-i regarding this measurement value information (Step S13). This measurement value information contains the measurement value and the airline code. This airline code matches the airline code contained in the corresponding print information.

As the printer control apparatus 2-i acquires the measurement value information from the printer apparatus 6, the printer driver 47 calculates one allowable range corresponding to the airline code contained in this measurement value information from a plurality of allowable ranges 62 by referencing the allowable range table 45. As the allowable range is calculated, the printer driver 47 determines whether or not the measurement value contained in this measurement value information is included in the corresponding allowable range (Step S14).

If this measurement value is not included in the corresponding allowable range (Step S14, Yes), the printer driver 47 calculates a correction value on the basis of the measurement value contained in this measurement value information (Step S15). As the correction value is calculated, the printer driver 47 creates correction value information. This correction value information contains the airline code and the correction value. This airline code matches the airline code contained in the measurement value information acquired from the printer apparatus 6. As the correction value information is created, the printer driver 47 transmits this correction value information to the printer apparatus 6 (Step S16).

As the correction value information is acquired from the printer control apparatus 2-i, the printer apparatus 6 updates the correction value table 25 such that the correction value corresponding to the airline code contained in this correction value information among a plurality of correction values 33 represents the correction value contained in the corresponding correction value information (Step S17).

After the correction value information is transmitted to the printer apparatus 6 (Step S16), the printer driver 47 returns a print result to the airline application 46-Y (Step S18). The printer driver 47 returns the print result to the airline application 46-Y (Step S18) when the measurement value contained in the measurement value information acquired from the printer apparatus 6 is included in the corresponding allowable range (Step S9, No) (Step S14, No). The print result represents whether or not the print data is appropriately printed on the tag 11-k or the tag 11-(k+1), that is, whether or not the measurement value contained in the measurement value information acquired from the printer apparatus 6 is included in the corresponding allowable range.

As a print result is acquired from the printer driver 47, the airline application 46-Y displays a message indicating the print result by controlling the input/output unit 41 (Step S19).

After the print data is printed on the tag 11-k, a user cuts a plurality of tags 11-1 to 11-m along the perforations 12-k, peels the seal 16 of the tag 11-k from the pasteboard 15, and attaches the seal 16 to baggage. A user cancels the tag 11-k when a fact that one print data is printed on two tags is displayed on the display unit 20 of the printer apparatus 6. Then, a user peels the seal 16 of the tag 11-(k+1) from the pasteboard 15 and attaches it to baggage.

[Advantages of Printer Apparatus]

The printer apparatus 6 according to the embodiment has the memory unit 21, the print unit 22, the sensor unit 23, the measurement value transmission unit 27, and the correction value update unit 28. The memory unit 21 records the first correction value. When the print data is received from the printer control apparatus 2-i, the print unit 22 prints the print data on the first tag 11-k by feeding the first tag 11-k among a plurality of tags 11-1 to 11-m on the basis of the first correction value. The sensor unit 23 measures the measurement value regarding the length of the first tag 11-k when the first tag 11-k is fed. The measurement value transmission unit 27 transmits the measurement value to the printer control apparatus 2-i. The correction value update unit 28 updates the first correction value to the second correction value when the second correction value set on the basis of the measurement value is received from the printer control apparatus 2-i. The print unit 22 prints print data on the second tag 11-(k+1) by feeding the second tag 11-(k+1) among a plurality of tags 11-1 to 11-m on the basis of the second correction value when the first correction value is updated to the second correction value, and the retry command is then received from the printer control apparatus 2-i.

Such the printer apparatus 6 updates the correction value set on the basis of the measured measurement value whenever the first tag 11-k is fed. Such a printer apparatus 6 can appropriately feed the second tag 11-(k+1) to be fed subsequently and can appropriately print the print data on the second tag 11-(k+1) by updating the correction value in this manner.

The memory unit 21 records the correction value table 25 in which a plurality of airline codes 32 are associated with a plurality of correction values 33. The print unit 22 prints print data on the first tag 11-k by feeding the first tag 11-k on the basis of the first correction value corresponding to the first airline code among a plurality of correction values 33 when the first airline code is received along with the print data. The correction value update unit 28 updates the correction value corresponding to the second airline code among a plurality of correction values to the third correction value when the second airline code is received from the printer control apparatus 2-i along with the third correction value. Such a printer apparatus 6 can appropriately feed the tag 11-k to be printed depending on the type of the tag 11-k to be printed and can appropriately print the print data on the tag 11-k.

Alternatively, although the printer apparatus 6 according to the embodiment records a plurality of correction values 33, the printer apparatus 6 may record only one correction value. Even in this case, the printer apparatus 6 can appropriately feed the tag 11-k and appropriately print the print data on the tag 11-k even when the feeding error changes due to the updated correction value.

The printer apparatus 6 according to the embodiment further has the display unit 20 that displays a message indicating that the print data is printed on two tags among a plurality of tags 11-1 to 11-m when the retry command is received from the printer control apparatus 2-i. Such a printer apparatus 6 can allow a user to recognize that one print data is printed on two tags by displaying the message on the display unit 20.

Alternatively, although the printer apparatus 6 according to the embodiment causes the display unit 20 to display the message when the same print data is printed on a plurality of tags, the presentation of the message may be omitted. Even in this case, the printer apparatus 6 can appropriately feed the tag 11-k and appropriately print the print data on the tag 11-k.

[Advantages of Printer Control Apparatus]

The printer control apparatus 2-i according to the embodiment has the printer control unit 51, the measurement value acquisition unit 52, and the correction value update unit 53. The printer control unit 51 transmits print data to the printer apparatus 6 such that the printer apparatus 6 prints the print data on the first tag 11-k among the tags 11-1 to 11-m having the same type. The measurement value acquisition unit 52 receives the measurement value measured by the printer apparatus 6 from the printer apparatus 6. The correction value update unit 53 transmits the second correction value to the printer apparatus 6 such that the first correction value recorded in the printer apparatus 6 is updated to the second correction value calculated on the basis of the measurement value. The printer control unit 51 transmits the retry command to the printer apparatus 6 to print the print data on the second tag 11-(k+1) among a plurality of tags 11-1 to 11-m when the measurement value is not included in the allowable range. The printer apparatus 6 prints on the tag 11-k by feeding the tag 11-k on the basis of the correction value recorded in the printer apparatus 6.

Such a printer control apparatus 2-i can appropriately feed the tag 11-k and appropriately print the print data on the tag 11-k even when the feeding error changes by updating the correction value recorded in the printer apparatus 6. Such a printer control apparatus 2-i can reduce a user's burden by controlling the printer apparatus 6 such that the print data is printed on the second tag 11-(k+1) when the print data is not appropriately printed on the first tag 11-k.

The printer control apparatus 2-i according to the embodiment has the memory unit 42 that records the allowable range table 45 in which a plurality of airline codes 61 are associated with a plurality of allowable ranges 62. The printer control unit 51 transmits the retry command to the printer apparatus 6 by referencing the allowable range table 45 when the measurement value is not included in the allowable range corresponding to the first airline code that identifies the type of a plurality of tags 11-1 to 11-m among a plurality of allowable ranges 62. Such a printer control apparatus 2-i can appropriately determine whether or not the same print data is printed on the next tag even when the allowable range is different for each type of the tag.

Alternatively, although the printer control apparatus 2-i according to the embodiment records a plurality of allowable ranges 62, the printer control apparatus 2-i may record only one allowable range. Even in this case, the printer control apparatus 2-i can determine whether or not the print data is appropriately printed on the first tag 11-k. If the print data is not appropriately printed on the first tag 1-k, the print data can be printed on the other second tag 11-(k+1). In addition, the printer control apparatus 2-i may record no allowable range. In this case, the printer control apparatus 2-i can determine whether or not the print data is appropriately printed on the first tag 11-k using the allowable range acquired from the upper layer airline application 46-Y.

The printer apparatus 6 records the correction value table 25 in which a plurality of airline codes 32 are associated with a plurality of correction values 33. The printer control unit 51 transmits the first airline code to the printer apparatus 6 along with print data such that the printer apparatus 6 prints the print data on the first tag 11-k by feeding the first tag 11-k on the basis of the first correction value corresponding to the first airline code among a plurality of correction values. The correction value update unit 53 transmits the first airline code to the printer apparatus 6 along with the second correction value such that the first correction value corresponding to the first airline code among a plurality of correction values is updated to the second correction value.

Such a printer control apparatus 2-i can appropriately feed the tag 11-k to be printed and can appropriately print the print data on the tag 11-k depending on the type of the tag 11-k to be printed by updating the correction value table 25 recorded in the printer apparatus 6.

The printer control apparatus 2-i according to the embodiment controls the printer apparatus 6 such that a message indicating that the print data is printed on two tags is displayed on the display unit 20 of the printer apparatus 6 when the measurement value is not included in the allowable range. Such a printer control apparatus 2-i can allow a user to recognize that one print data is printed on two tags by displaying the message on the display unit 20 of the printer apparatus 6.

Alternatively, although the printer control apparatus 2-i according to the embodiment displays the message on the display unit 20 of the printer apparatus 6, such a presentation may be omitted. Even without such a presentation, the printer control apparatus 2-i can reduce a user's burden by printing the print data on the second tag 11-(k+1) when the print data is not appropriately printed on the first tag 11-k.

Alternatively, although a plurality of tags 11-1 to 11-m are formed as a fan-fold sheet, the tags may be formed in other types. For example, a roll sheet in which a plurality of tags 11-1 to 11-m are connected in a roll shape may be employed. Even when a plurality of tags 11-1 to 11-m are formed in such a type, the printer apparatus 6 can appropriately feed the second tag 11-(k+1) and appropriately print the print data on the second tag 11-(k+1) by updating the correction value.

Alternatively, the measurement value transmission unit 27 may calculate the measurement value corresponding to the feeding error generated by feeding the tag 11-k on the basis of the length from the perforation 12-(k-1) to the perforation 12-k. It may be determined that the perforations 12-(k-1) and 12-k are placed in positions obtained by detecting portions of the pasteboard 15 between the tags 11-(k-1) and 11-k and between the tags 11-k and 11-(k+1) using the sensor unit 23, calculating the pasteboard length, and bisecting the pasteboard length.

Alternatively, although the printer apparatus 6 adjusts the feeding by adjusting the step of the feeding motor, the feeding adjustment may be performed using other methods. For example, the feeding adjustment may be performed by adjusting a fire interval of the print head.

Alternatively, although the printer system 1 is employed to print the print data on a baggage tag attached to baggage, the printer system 1 may also be employed to print the print data on other types of continuous sheets in which a plurality of media are connected. For example, the medium may include a voucher attached to baggage delivered by a courier service.

Reference Signs List

1   PRINTER SYSTEM

| | |
|---|---|
| 2-1 to 2-n | PRINTER CONTROL APPARATUSES |
| 6 | PRINTER APPARATUS |
| 11-1 to 11-m | TAGS |
| 20 | DISPLAY UNIT |
| 21 | MEMORY UNIT |
| 22 | PRINT UNIT |
| 23 | SENSOR UNIT |
| 24 | CONTROL UNIT |
| 25 | CORRECTION VALUE TABLE |
| 26 | PRINT CONTROL UNIT |
| 27 | MEASUREMENT VALUE TRANSMISSION UNIT |
| 28 | CORRECTION VALUE UPDATE UNIT |
| 41 | INPUT/OUTPUT UNIT |
| 42 | MEMORY UNIT |
| 43 | CONTROL UNIT |
| 45 | ALLOWABLE RANGE TABLE |
| 46-1 to 46-X | AIRLINE APPLICATIONS |
| 47 | PRINTER DRIVER |
| 51 | PRINTER CONTROL UNIT |
| 52 | MEASUREMENT VALUE ACQUISITION UNIT |
| 53 | CORRECTION VALUE UPDATE UNIT |
| 54 | PRINT RESULT NOTIFICATION UNIT |
| 61 | AIRLINE CODES |
| 62 | ALLOWABLE RANGES |

**Claims**

1.   A printer apparatus comprising:

a memory unit configured to record a first correction value;
a print unit configured to print print data on a first medium among a plurality of media by feeding the first medium on the basis of the first correction value when the print data is received from a printer control apparatus;
a sensor unit configured to measure a measurement value corresponding to a feeding error of the first medium when the first medium is fed;
a measurement value transmission unit configured to transmit the measurement value to the printer control apparatus; and
a correction value update unit configured to update the first correction value to a second correction value set on the basis of the measurement value when the second correction value is received from the printer control apparatus,
wherein the print unit prints the print data on a second medium by feeding the second medium among the media on the basis of the second correction value when the first correction value is updated to the second correction value, and a retry command is then received from the printer control apparatus.

2.   The printer apparatus according to claim 1,
wherein the memory unit records a correction value table in which a plurality of identification codes are associated with a plurality of correction values,
the print unit prints the print data on the first medium by feeding the first medium on the basis of the first correction value corresponding to a first identification code among the correction values when the first identification code is received along with the print data, and
the correction value update unit updates a correction value corresponding to a second identification code among the correction values to a third correction value when the second identification code is received from the printer control apparatus along with the third correction value.

3.  The printer apparatus according to claim 1 or 2, further comprising
a display unit configured to display a message indicating that the print data is printed on two media among the media when the retry command is received from the printer control apparatus.

4.  A printer control apparatus comprising:

a printer control unit configured to transmit print data to a printer apparatus such that the printer apparatus prints the print data on a first medium among a plurality of media;
a measurement value acquisition unit configured to receive a measurement value measured by the printer apparatus from the printer apparatus; and
a correction value update unit configured to transmit a second correction value to the printer apparatus such that a first correction value recorded in the printer apparatus is updated to the second correction value calculated on the basis of the measurement value,
wherein the printer control unit transmits a retry command to the printer apparatus such that the print data is printed on a second medium among the media when the measurement value is not included in a predetermined allowable range, and
the printer apparatus performs printing on a medium by feeding the medium on the basis of a correction value recorded in the printer apparatus.

5.  The printer control apparatus according to claim 4, further comprising
a memory unit configured to record an allowable range table in which a plurality of identification codes are associated with a plurality of allowable ranges,
wherein the printer control unit transmits the retry command to the printer apparatus when the measurement value is not included in the allowable range corresponding to a first identification code for identifying type of the media among the allowable ranges by referencing the allowable range table.

6.  The printer control apparatus according to claim 5,
wherein the printer apparatus records a correction value table in which the identification code are associated with a plurality of correction values,
the printer control unit transmits the first identification code to the printer apparatus along with the print data such that the printer apparatus prints the print data on the first medium by feeing the medium on the basis of the first correction value corresponding to the first identification code among the correction values, and
the correction value update unit transmits the first identification code to the printer apparatus along with the second correction value such that the first correction value corresponding to the first identification code among the correction values is updated to the second correction value.

7.  The printer control apparatus according to any one of claims 4 to 6,
wherein the printer control apparatus controls the printer apparatus such that a message indicating that the print data is printed on two media is displayed on a display unit provided in the printer apparatus when the measurement value is not included in the allowable range.

8.  A printer system comprising:

the printer control apparatus according to any one of claims 4 to 7; and
the printer apparatus.

9.  A printer driver program causing a computer to execute a method comprising:

transmitting print data to a printer apparatus to cause the printer apparatus to print the print data on a first medium among a plurality of media;
receiving a measurement value measured by the printer apparatus from the printer apparatus;
transmitting a second correction value calculated on the basis of the measurement value to the printer apparatus such that a first correction value recorded in the printer apparatus is updated to the second correction value; and
transmitting a retry command to the printer apparatus such that the print data is printed on a second medium among the media when the measurement value is not included in a predetermined allowable range,
wherein the printer apparatus performs printing on a medium by feeding the medium on the basis of a correction value recorded in the printer apparatus.

10. The printer driver program according to claim 9, further causing a computer to execute a method comprising:
transmitting the retry command to the printer apparatus by referencing an allowable range table in which a plurality of identification codes are associated with a plurality of allowable ranges when the measurement value is not included in the allowable range corresponding to a first identification code that identifies type of the media among the allowable ranges.

11. The printer driver program according to claim 10,
wherein the printer apparatus records a correction value table in which the identification codes are associated with a plurality of correction values, and
the printer driver program further causing a computer to execute a method comprising:

transmitting the first identification code to the printer apparatus along with the print data such that the printer apparatus prints the print data on the first medium by feeding the medium on the basis of the first correction value corresponding to the first identification code among the correction values; and
transmitting the first identification code to the printer apparatus along with the second correction value such that the first correction value corresponding to the first identification code among the correction values is updated to the second correction value.

12. The printer driver program according to any one of claims 9 to 11, further causing a computer to execute a method comprising:
controlling the printer apparatus such that a message indicating that the print data is printed on two media is displayed on a display unit provided in the printer apparatus when the measurement value is not included in the allowable range.

# FIG.1

# FIG.2

# FIG.3

**6**

PRINTER APPARATUS

**20**

DISPLAY UNIT

**21**

MEMORY UNIT

**25**

CORRECTION VALUE TABLE

**22**

PRINT UNIT

**23**

SENSOR UNIT

**24**

CONTROL UNIT

**26**

PRINT CONTROL UNIT

**27**

MEASUREMENT VALUE TRANSMISSION UNIT

**28**

CORRECTION VALUE UPDATE UNIT

# FIG.4

25

| AIRLINE CODE | CORRECTION VALUE |
|:---:|:---:|
| 131 | 0 |
| 205 | 0 |
| | |

32　　　　　33

# FIG.5

# FIG.6

11-k

15

16

36

# FIG.7

11-k

15

16

37

# FIG.8

~2-i

**PRINTER CONTROL APPARATUS**

~41

| INPUT/OUTPUT UNIT |
| --- |

~42

**MEMORY UNIT**

| ALLOWABLE RANGE TABLE | ~45 |
| --- | --- |

~43

**CONTROL UNIT**

~46-1

| AIRLINE APPLICATION |
| --- |

~46-Y

| AIRLINE APPLICATION |
| --- |

⋮  ~46-X

| AIRLINE APPLICATION |
| --- |

46-1 TO 46-X

~47

**PRINTER DRIVER**

~51

| PRINT CONTROL UNIT |
| --- |

~52

| MEASUREMENT VALUE ACQUISITION UNIT |
| --- |

~53

| CORRECTION VALUE UPDATE UNIT |
| --- |

~54

| PRINT RESULT NOTIFICATION UNIT |
| --- |

# FIG.9

| AIRLINE CODE | ALLOWABLE RANGE | | |
|---|---|---|---|
| | TAG LENGTH | LOWER MARGIN | UPPER MARGIN |
| 131 | 500 | -10 | +10 |
| 205 | 510 | -5 | +5 |
| | | | |

# FIG.10

```
       46-Y                    47                      6
  AIRLINE APPLICATION    PRINTER DRIVER        PRINTER APPARATUS
```

CREATE PRINT DATA — S1

PRINT INFORMATION S2 → S3 PRINT INFORMATION →

S4
PRINT WHILE
MEASURING TAG LENGTH

S5 MEASUREMENT
VALUE INFORMATION ←

CALCULATE
CORRECTION VALUE — S6

CORRECTION
VALUE INFORMATION S7 →

S8
UPDATE CORRECTION
VALUE

IS
MEASURE-
MENT VALUE OUT
OF ALLOWABLE
RANGE? S9

NO

YES RETRY COMMAND S10 →

S11 PRINT WHILE
MEASURING TAG LENGTH

S12 DISPLAY THAT ONE
PRINT DATA IS PRINTED
ON TWO TAGS

S13 MEASUREMENT
VALUE INFORMATION ←

IS
MEASURE-
MENT VALUE OUT
OF ALLOWABLE
RANGE? S14

NO

YES
CALCULATE
CORRECTION VALUE — S15

CORRECTION
VALUE INFORMATION S16 →

S17
UPDATE CORRECTION
VALUE

S18 PRINT RESULT ←

DISPLAY PRINT RESULT — S19

END          END          END

## INTERNATIONAL SEARCH REPORT

| | International application No. |
|---|---|
| | PCT/JP2016/064940 |

**A.    CLASSIFICATION OF SUBJECT MATTER**
*B41J29/38*(2006.01)i, *B41J2/01*(2006.01)i, *B41J3/36*(2006.01)i, *B41J11/42* (2006.01)i, *B41J29/42*(2006.01)i, *G06F3/12*(2006.01)i

According to International Patent Classification (IPC) or to both national classification and IPC

**B.    FIELDS SEARCHED**

Minimum documentation searched (classification system followed by classification symbols)
B41J29/38, B41J2/01, B41J3/36, B41J11/42, B41J29/42, G06F3/12

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2016 |
| Kokai Jitsuyo Shinan Koho | 1971-2016 | Toroku Jitsuyo Shinan Koho | 1994-2016 |

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| Y | JP 2004-244145 A  (Sato Corp.),<br>02 September 2004 (02.09.2004),<br>paragraphs [0014] to [0016]; fig. 1 to 4<br>(Family: none) | 1-12 |
| Y | JP 2005-300860 A  (Ricoh Co., Ltd.),<br>27 October 2005 (27.10.2005),<br>paragraphs [0006] to [0008]; fig. 2, 6<br>(Family: none) | 1-12 |
| Y<br>A | JP 2010-221661 A  (Seiko Epson Corp.),<br>07 October 2010 (07.10.2010),<br>paragraphs [0043] to [0045]<br>(Family: none) | 2,5-6,10-11<br>1,3-4,7-9,12 |

| ☒    Further documents are listed in the continuation of Box C. | ☐    See patent family annex. |
|---|---|

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered    to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| 22 July 2016 (22.07.16) | 02 August 2016 (02.08.16) |

| Name and mailing address of the ISA/ | Authorized officer |
|---|---|
| Japan Patent Office<br>3-4-3,Kasumigaseki,Chiyoda-ku,<br>Tokyo 100-8915,Japan | |
| | Telephone No. |

Form PCT/ISA/210 (second sheet) (January 2015)

23

**INTERNATIONAL SEARCH REPORT**

International application No.

PCT/JP2016/064940

C (Continuation).   DOCUMENTS CONSIDERED TO BE RELEVANT

| Category* | Citation of document, with indication, where appropriate, of the relevant passages | Relevant to claim No. |
|---|---|---|
| Y<br>A | JP 2008-126618 A  (Canon Inc.),<br>05 June 2008 (05.06.2008),<br>paragraphs [0069] to [0081], [0087] to [0101];<br>fig. 1 to 2, 15 to 19<br>(Family: none) | 2,5-6,10-11<br>1,3-4,7-9,12 |
| Y<br>A | JP 2009-222769 A  (Canon Inc.),<br>01 October 2009 (01.10.2009),<br>paragraph [0056]; fig. 9<br>(Family: none) | 3,7,12<br>1-2,4-6,8-11 |
| A | JP 2013-126759 A  (Seiko Epson Corp.),<br>27 June 2013 (27.06.2013),<br>paragraphs [0028], [0034] to [0043]; fig. 1 to<br>6<br>(Family: none) | 1-12 |
| A | JP 2015-168154 A  (Seiko Epson Corp.),<br>28 September 2015 (28.09.2015),<br>paragraphs [0030] to [0034], [0037] to [0040];<br>fig. 1 to 2, 5 to 10<br>& US 2015/0251469 A1<br>paragraphs [0104] to [0165]; fig. 1 to 2, 5 to<br>10<br>& KR 10-2015-0105207 A | 1-12 |
| A | JP 2009-154357 A  (Sato Knowledge & Intellectual<br>Property Institute, Sato Corp.),<br>16 July 2009 (16.07.2009),<br>paragraphs [0025] to [0037], [0044] to [0057],<br>[0064] to [0069]; fig. 1 to 5<br>(Family: none) | 1-12 |

Form PCT/ISA/210 (continuation of second sheet) (January 2015)

**REFERENCES CITED IN THE DESCRIPTION**

**Patent documents cited in the description**

- JP 2012116133 A
- JP 8087610 A
- JP 2001225518 A